# EUROPÄISCHE PATENTSCHRIFT

(11) **EP 1 029 995 B1**
(45) Veröffentlichungstag und Bekanntmachung des Hinweises auf die Patenterteilung: **06.10.2004**
(21) Anmeldenummer: 00102896.8
(22) Anmeldetag: 12.02.2000
(51) Int. Cl.: E04B 1/78

(54) **Dämmstoffelement und Vorrichtung zur Herstellung eines Dämmstoffelementes**
Insulation and manufacturing device for an insulation element
Isolation et dispositif de fabrication d'un élément d'isolation

(30) Priorität: 18.02.1999 DE 19906734
(43) Veröffentlichungstag der Anmeldung: 23.08.2000
(73) Patentinhaber: Deutsche Rockwool Mineralwoll GmbH & Co. OHG, 45966 Gladbeck (DE)
(72) Erfinder: Klose, Gerd-Rüdiger, Dr., 46286 Dorsten (DE)
(74) Vertreter: Wanischeck-Bergmann, Axel, Dipl.-Ing.

(56) Entgegenhaltungen:
- EP-A- 0 217 396
- EP-A- 0 498 276
- DE-A- 2 508 733
- DE-A- 4 222 207
- DE-C- 4 319 340
- DE-U- 1 867 167
- US-A- 3 067 806

## Beschreibung

Die Erfindung betrifft ein Dämmstoffelement, bestehend aus Mineralfasem, insbesondere Steinwolle, welche an den Kreuzungs- und Berührungsstellen mittels eines ausgehärteten Bindemittels zu einem Faserverband verbunden und im wesentlichen parallel zu großen Oberflächen ausgerichtet sind, wobei der Faserverband in Teilbereichen zumindest teilweise aufgelockert ist. Die Erfindung betrifft ferner eine Vorrichtung zur Herstellung eines Dämmstoffelementes aus Mineralfasern, insbesondere eines Mineralfaserfilzes aus Steinwolle, mit einem Förderband, auf dem die aus einem Schmelz- und Zerfaserungsaggregat abgezogenen Mineralfasem angeordnet sind, und mit einem Härteofen, in dem ein Bindemittel zwischen den Mineralfasem ausgehärtet wird.

Dämmstoffelemente aus Mineralfasern werden in den Lieferformen Dämmfilz und Dämmplatte vornehmlich für die Wärmedämmung von Gebäuden hergestellt und verwendet. Dämmfilze weisen im allgemeinen geringere Anteile an Bindemitteln auf, als Dämmplatten. Demzufolge sind Dämmfilze im Vergleich zu Dämmplatten kompressibler und flexibler und lassen sich demzufolge auch aufrollen. Hierbei unterscheidet man Dämmstoffelemente aus Glasfasern von Dämmstoffelementen aus Steinwollefasem. Übliche Dämmstoffelemente, nämlich Dämmfilze aus Glasfasern weisen in Übereinstimmung mit der Begrenzung der maximalen Wärmeleitfähigkeit auf die Wärmeleitfähigkeitsgruppen WLG 040 und 035 nach DIN 4108 Mindestrohdichten zwischen 12 und 24 kg/m³ auf. Zwar beschreibt die Patentliteratur auch solche Dämmfilze aus Glasfasern, die Rohdichten zwischen 25 und 40 kg/m³ haben, diese Dämmfilze sind aber auf dem Markt bisher nicht erhältlich, soweit die Dämmfilze unkaschiert sind.

Dämmstoffelemente, nämlich Dämmfilze aus Steinwollefasern, die eine Wärmeleitfähigkeit gemäß der Wärmeleitfähigkeitsgruppe WLG 040 aufweisen, haben Rohdichten zwischen 23 und 33 kg/m³. Um die Wärmeleitfähigkeitsgruppe WLG 035 zu erfüllen, sind bereits Rohdichten zwischen 40 und 60 kg/m³ notwendig. Diese Dämmfilze lassen sich selbst mit optimalen Bindemittelgehalten und optimaler Bindemittelverteilung nicht oder in der Regel unter Inkaufnahme von Beschädigungen der Dämmstoffbahn aufrollen. Um die Beschädigungen auszuschließen, werden Dämmfilze daher mit Folien, Papier oder Papier-Verbundfolien kaschiert. Die Kaschierungen, die beispielsweise bei den weit verbreiteten Randleisten-Dämmfilzen vorhanden sind, haben mehrere Funktionen. Sie dienen zum einen als Trägermaterial beim Einbau des Dämmstoffes, beispielsweise zwischen den Sparren einer Dachkonstruktion, bremsen andererseits den Wasserdampf und sperren schließlich den Luftaustausch zwischen Innen- und Außenraum. Derartige Dämmfilze werden beim Aufrollen um ca. 40 bis 60% komprimiert. Diese Kompression verursacht große Scherbeanspruchungen in der Dämmstoffstruktur, wobei die Kaschierungen einen Großteil der auftretenden Zugkräfte auffangen.

Neben den kaschierten Dämmfilzen aus Steinwollefasem sind aber auch unkaschierte, komprimierte Dämmfilze aus Steinwollefasern bekannt, die in einzelne Plattenabschnitte abgelängt werden können und in Form eines kürzeren Abschnittes die Eigenschaften einer Dämmplatte, insbesondere die Formstabilität einer Dämmplatte aufweisen. Die Steifigkeit dieser Abschnitte ermöglicht einen Einbau dieser Abschnitte unter einer Zwängungsspannung zwischen den Dachsparren einer Dachkonstruktion. Hierbei kann eine bestimmte Kompression parallel zu den großen Oberflächen auf den Abschnitt ausgeübt werden, so daß der Abschnitt zwischen beabstandet zueinander angeordneten Dachsparren einsetzbar ist.

Es hat sich gezeigt, daß unkaschierte Dämmfilze bei Materialstärken deutlich unter 10 cm im allgemeinen ohne Beschädigungen aufrollbar sind. Dämmfilze mit Materialstärken von mehr als 14 cm reißen aber selbst dann ein, wenn sie zuvor komprimiert wurden. Derartig beschädigte Dämmfilze sind in der Regel unverkäuflich und stellen demgemäß ein Ausschußprodukt dar, welches entweder deponiert oder aufbereitet und dem Herstellungsprozeß erneut zugeführt werden muß. Andererseits ist ein Aufrollen der Dämmfilze erwünscht, da hierdurch die Lagerung und der Transport der Dämmfilze, die in Dämmplatten abgelängt werden sollen, wesentlich vereinfacht und vergünstigt wird. Die beim Aufrollen der Dämmfilze auftretenden Spannungen treten im radial äußeren Bereich der Dämmfilzrolle als Zugspannungen und im radial inneren Bereich als Druckspannungen auf. Zwischen den Bereichen mit den Druckspannungen bzw. den Zugspannungen liegt eine innere Zone, die als neutrale Zone spannungsfrei bleibt. Die auf die Dämmstofffilze ausgeübten Kräfte werden umso größer, je kleiner der Krümmungsradius ist und steigen mit zunehmender Dämmstoffdicke an. Die Zugfestigkeit und Steifigkeit des Dämmfilzes bzw. der voranstehend beschriebenen Dämmstoffelemente ist in Richtung der Fasern größer, als unter einem Winkel quer zum allgemeinen Faserverlauf. Die laminare Struktur von Dämmfilzen aus Glaswollefasem führt darüberhinaus zu dem Vorteil, daß sich diese Dämmfilze wesentlich problemloser aufrollen lassen, als Dämmfilze aus Steinwollefasern. Die schlechtere Aufrollbarkeit der Dämmfilze aus Steinwollefasern ist dadurch begründet, daß die Steinwollefasem kürzere, in sich gekrümmte Monofile ausbilden, die sich zum Teil flockenartig ansammeln und somit eine weniger zugfeste Struktur bilden.

Üblicherweise werden die mit zumeist organischen Bindemitteln imprägnierten Mineralfasern auf einem ebenen Transportband gesammelt. Die Dichte der aufgesammelten Mineralfasem ist von verschiedenen Faktoren abhängig. Die Mineralfasern werden in üblicher Weise bei der Herstellung von Dämmfilzen in vertikaler Richtung um ca. 30 bis 70% und in horizontaler Richtung mit maximal 15% gleichmäßig komprimiert, so daß sich eine geschlossene Struktur ausbildet. Nach dieser Behandlung werden die Mineralfasern einem Härteofen zugeführt, in dem das Bindemittel mittels Heißluft ausgehärtet wird, so daß die Lieferdicke und die Struktur des Dämmstoffelementes fixiert sind. Hierbei wird die Dicke und damit auch die Rohdichte des Dämmstoffes mit Hilfe von Druckbändern eingestellt. Die Druckbänder bestehen im wesentlichen aus biegesteifen, schmalen Körpern, die eine große Zahl von Öffnungen für ein Durchströmen mit Heißluft aufweisen. Diese sogenannten Härteofen-Lamellen sind an Ketten angehängt und bilden jeweils ein endloses Band. Die Härteofen-Lamellen sind glatt und weisen eine große Zahl von Rund- oder Langlöchem auf, durch die die Heißluft strömt. Unter dem mehr oder weniger hohen Druck, der von den Härteofen-Lamellen auf die Mineralfasermasse ausgeübt wird, dringen die Mineralfasem in die Rund- oder Langlöcher ein, so daß die Oberfläche des Dämmstoffelementes durch voneinander isoliert angeordneten Erhebungen geprägt ist.

Aus der DE 85 28 331 U1 oder DE 0 217 396 A2 ist eine Dämmplatte bekannt, bestehend aus Mineralfasern, welche an den Kreuzungs- und Berührungsstellen mittels eines ausgehärteten Bindemittels zu einem Faserverband verbunden sind, wobei Teilbereiche derart durch mechanisches Walken bearbeitet sind, daß der Faserverband mindestens teilweise aufgelöst ist. Diese Dämmplatte ist zwecks Anbringung an Körpern mit gebogener Fläche, wie Rohren, ausgehend von nur einer Plattenseite in Abhängigkeit vom Krümmungsradius der gebogenen Fläche bis in eine solche Tiefe der Plattendicke und mit solchen Abständen voneinander mechanisch bearbeitet, daß eine gelenkige Biegsamkeit gegeben ist. Die mechanische Bearbeitung erfolgt in Form eines mechanischen Walkens von Teilbereichen in der Weise, daß der Faserverband mindestens teilweise aufgelöst ist.

Durch diese Bearbeitung verlieren die Teilbereiche ihre Druckfestigkeit, so daß sie sich leicht zusammendrücken lassen.

Eine Vorrichtung zur Herstellung eines derartigen Dämmstoffelementes ist aus der DE 32 03 622 C2 bekannt. Diese Vorrichtung besteht aus drehbar gelagerten Druckrollen und einer Fördereinrichtung zur Relativbewegung der Dämmplatten gegenüber den Druckrollen. Es ist hierbei vorgesehen, daß die Dämmplatten in parallel zu Bauwerksträgem verlaufenden Bereichen durch mechanisches Walken flexibel ausgebildet werden, da das mechanische Walken den Faserverband in den Bereichen der Druckrollen zumindest teilweise auflöst.

Eine weitere Vorrichtung zur Herstellung eines Dämmstoffelementes, bei der Druckelemente in Teilbereiche der großen Oberflächen des Dämmstoffelements eindringen ist aus der DE 43 19 340 C1 bekannt.

Ausgehend von diesem Stand der Technik liegt der Erfindung die . Aufgabe zugrunde, ein Dämmstoffelement zu schaffen, das trotz hoher Rohdichte wickelbar ist. Ferner ist es **Aufgabe** der Erfindung, eine Vorrichtung zu schaffen, die die Herstellung eines wickelbaren Dämmstoffelementes mit hoher Rohdichte ermöglicht.

Die **Lösung** dieser Aufgabenstellung sieht bei einem efindungsgemäßen Dämmstoffelement vor, daß die Mineralfasern in den aufgelösten Teilbereichen aus ihrer ursprünglich parallel zu den großen Oberflächen verlaufenden Ausrichtung in eine nahezu rechtwinklig zu den großen Oberflächen verlaufenden Ausrichtung abgelenkt sind, wobei die Rohdichte der Teilbereiche im wesentlichen mit der Rohdichte des Dämmstoffelementes außerhalb der Teilbereiche übereinstimmt, und daß die Teilbereiche in beiden großen Oberflächen ausgebildet sind.

Demzufolge ist bei dem erfindungsgemäßen Dämmstoffelement nicht nur eine Auflösung der Teilbereiche im Hinblick auf die grundsätzliche Faserorientierung im Dämmstoffelement vorgesehen, sondern die Fasern sind auch in den Teilbereichen orientiert und zwar im wesentlichen rechtwinklig zur üblichen Faserorientierung im Dämmstoffelement. Hieraus ergeben sich Vorteile hinsichtlich der Rollbarkeit des Dämmstoffelementes, insbesondere in Form eines Dämmfilzes, bei gleichzeitig hoher Stabilität des Dämmstoffelementes auch in den Teilbereichen, so daß hier eine definierte Zugbeanspruchung noch möglich ist.

Nach einem weiteren Merkmal der Erfindung ist vorgesehen, daß die Teilbereiche zueinander in gleichen Abständen angeordnet sind. Hierdurch wird der Vorteil erzielt, daß die Zug- und Druckbeanspruchungen im Dämmstoffelement gleich verteilt sind, so daß maximale Zug- und Druckbeanspruchungen in bestimmten Abschnitten des Dämmstoffelementes, insbesondere während des Aufwickelvorganges verhindert werden.

Es ist ferner vorgesehen, daß die Teilbereiche in den gegenüberliegend angeordneten großen Oberflächen versetzt zueinander angeordnet sind, so daß ein Teilbereich zur Aufnahme einer hohen Zugbeanspruchung zwischen zwei Teilbereichen zur Aufnahme von hohen Druckbeanspruchungen im Bereich gegenüberliegend angeordneter Oberflächen liegt. Diese Anordnung hat den Vorteil, daß eine bessere Verteilung der wechselseitigen Beanspruchungen im Bereich der einander gegenüberliegenden großen Oberflächen über die gesamte Länge des Dämmstoffelementes erzielbar ist und eine Schwächung des Dämmstoffelements in einer Ebene parallel zur Flächennormalen der großen Oberflächen unterbleibt.

Es ist ferner vorgesehen, daß die Teilbereiche in Abhängigkeit der Rohdichte, des Kompressionsgrades und / oder der Ausgangsmaterialstärke bis maximal in die durch eine Ebene bestimmte Mitte zwischen und parallel zu den großen Oberflächen reicht. Bei dieser Ausgestaltung ist sichergestellt, daß in einem Teilbereich nicht sowohl Zug- als auch Druckspannungen auftreten können, die dann zu Scherbeanspruchungen führen, welche ein Aufreißen des Dämmstoffelementes im Bereich der Scherbeanspruchung zur Folge haben.

Da das Dämmstoffelement dennoch in den Teilbereich aufgrund der herabgesetzten Zugfestigkeit während des Wickelns oder beim Endwickeln zum Aufreißen tendiert, ist nach einem weiteren Merkmal der Erfindung vorgesehen, daß die Teilbereiche eine erhöhte Bindemittelkonzentration aufweisen. Diese erhöhte Bindemittelkonzentration kann beispielsweise während des Umlenkens der Fasern in die Teilbereiche eingespritzt werden. Hierbei muß darauf geachtet werden, daß die Bindemittelkonzentration nicht so hoch eingestellt wird, daß die positive Wirkung der umgelenkten Fasern in den Teilbereichen aufgehoben wird, indem die hohe Bindemittelkonzentration sämtliche Fasern miteinander verklebt und die Flexibilität des Dämmstoffelementes in diesem Bereich aufhebt.

Die Teilbereiche weisen im Bereich der großen Oberflächen eine geringe Verdichtung der Fasern auf. Hierdurch wird zwar eine höhere Rohdichte und eine Erhöhung der Zugfestigkeit in diesen Bereichen erzielt, der Vorteil liegt aber darin, daß sich eventuell bildende Risse nicht in das Dämmstoffelement fortpflanzen.

Durch die steile Anordnung der Fasern in den Teilbereichen relativ zu den großen Oberflächen entstehen lokale Zonen mit erhöhter Kompressibilität. Durch diese Verdichtungszonen wird beim Aufrollen ein Teil der Rückstellkräfte abgebaut, die zusätzlich auf die Außenzonen des Dämmstoffelementes einwirken. Zu hohe innere Rückstellkräfte bewirken zudem ein schlagartiges Abrollen des komprimierten Dämmstoffelementes nach dem Lösen einer Umhüllung, wodurch häufig ein Zerreißen des Dämmstoffelementes auftreten kann.

Dämmstoffelemente mit überwiegend parallel zu den großen Oberflächen ausgerichteten Fasern weisen zumeist eine ausreichende Zugfestigkeit auf, so daß es nicht zum Aufreißen der Dämmstoffbahn in den äußeren, auf Zug beanspruchten Wickelebenen der Rolle kommt. Bei kurzfaserigen Dämmstoffelementen, insbesondere solchen aus Steinwollefasem und / oder bei Dämmstoffelementen mit durch die Sammeltechnik induzierten Schwächezonen in der Struktur der Dämmstoffbahn kommt es sehr häufig zu Rißbildungen in den äußeren Zonen der aufgewickelten Rolle. Mit zunehmenden Dicken und Rohdichten werden naturgemäß die Spannungen in der aufgerollten Dämmstoffbahn größer.

Erfindungsgemäß werden bei dem Dämmstoffelement in der Zugzone lokal Umlagerungen der Fasern vorgenommen. Diese Umlagerung schafft nun aber Zonen mit geringerer Zugfestigkeit. Durch die Aufweitung dieser Teilbereiche soll zunächst eine Rißbildung verhindert werden. Wird die Zugfestigkeit allerdings überschritten, bilden sich im aufgerollten Zustand regelmäßige, flache Risse im Dämmstoffelement, die quer zur Längserstreckung verlaufen. Wird das Dämmstoffelement abgerollt, schließen sich diese Risse wieder unauffällig. Mit der voranstehend bereits beschriebenen erhöhten Bindemittelmenge in diesen Bereichen wird das kraftschlüssige Schließen der Risse und Einprägungen forciert und begünstigt.

Vorzugsweise weist das erfindungsgemäße Dämmstoffelement eine Rohdichte zwischen 20 und 80 kg/m³, insbesondere zwischen 40 und 60 kg/m³ auf, um die einschlägigen Wärmeleitfähigkeitskriterien zu erfüllen. Die benachbarten Teilbereiche sind in Abständen zwischen 10 und 200 mm, insbesondere zwischen 50 und 125 mm angeordnet. Alternativ kann vorgesehen sein, daß die Teilbereiche in der ersten und / oder der zweiten großen Oberfläche in unterschiedlichen, insbesondere variablen Abständen angeordnet sind, wobei beispielsweise die Teilbereiche in einem zuerst in eine Wickelaufrichtung einlaufenden Abschnitt des Dämmstoffelementes in geringeren Abständen angeordnet sind, da dieser Bereich im Wickel einer stärkeren Krümmung unterzogen wird, als der abschließend einlaufende Bereich, bei dem die Abstände zwischen den Teilbereichen größer ausgebildet werden können.

Alternativ bzw. ergänzend zu den voranstehenden Ausführungen können die Teilbereiche als Einschnitte ausgebildet sein.

In Ergänzung der voranstehend beschriebenen Ausgestaltung des Dämmstoffelementes oder als Alternative hierzu können die großen Oberflächen des Dämmstoffelementes eine wellenförmige Strukturierung aufweisen, wobei es sich als vorteilhaft erwiesen hat, die Teilbereiche im Bereich von Wellentälern der Strukturierung anzuordnen. Die regelmäßig aufgeprägten Wellen verbessern das Aussehen der Dämmstoffbahn und überdecken Inhomogenitäten und kleine Beschädigungen, wie beispielsweise flache Risse. Da die Aufprägung bereits nach der weitgehenden Vorverdichtung des Dämmstoffes erfolgt, werden die Homogenität der Oberfläche und damit die Zugfestigkeit der Grenzfläche erhöht. Ein zusätzlicher Nutzen der aufgeprägten Wellen besteht zudem darin, daß sie bei der Verwendung als Dämmstoff in Schrägdach-Konstruktionen im Notfall einer Beschädigung des Unterdaches wasserableitende Funktionen haben.

Zur **Lösung** der Aufgabenstellung bei einer gattungsgemäßen Vorrichtung ist vorgesehen, daß dem Härteofen zwei gegenüberliegend angeordnete Druckbänder und / oder Druckwalzen vorgeschaltet sind, die Druckelemente aufweisen, welche in Teilbereiche der großen Oberflächen des Dämmstoffelementes eindringen, um die im wesentlichen parallel zu den großen Oberflächen verlaufenden Mineralfasem in den Teilbereichen in im wesentlichen rechtwinklige Ausrichtung zu den großen Oberflächen abzulenken.

Die Dämmstoffelemente werden erfindungsgemäß auf einem vorzugsweise profilierten Transportband abgelegt, welches durch ein zweites, auf die gegenüberliegende Oberfläche wirkendes Transportband ergänzt ist, wobei dieses zweite Transportband nur über einen Abschnitt des Transportweges reicht. Die beiden Transportbänder sind als Druckbänder ausgebildet und wirken auf die beiden großen Oberflächen des Dämmstoffelementes ein. Alternativ können zwei gegenüberliegend angeordnete Druckwalzen vorgesehen sein, deren Abstand relativ zueinander einstellbar ist. In gleicher Weise können selbstverständlich auch die einander gegenüberliegend angeordneten Druckbänder bei der ersten Alternative hinsichtlich ihres Abstandes zueinander einstellbar ausgestaltet werden, um unterschiedliche Materialstärken und unterschiedliche Kompressionsgrade des Dämmstoffelementes zu erzielen. Sowohl die Druckbänder als auch die Druckwalzen weisen Druckelemente auf, die auf das durchlaufende Dämmstoffelement derart einwirken, daß sie in bestimmte Bereiche des Dämmstoffelementes eingreifen und die in diesen Bereichen parallel zu den großen Oberflächen verlaufenden Mineralfasern um ca. 90° ablenken, so daß die Mineralfasern in diesem Teilbereich nach Durchlauf der Druckbänder bzw. Druckwalzen einen Faserverlauf im wesentlichen rechtwinklig zu den großen Oberflächen des Dämmstoffelementes haben.

Nach einem weiteren Merkmal der Erfindung ist vorgesehen, daß die Druckbänder in Förderrichtung aufeinander zulaufend angeordnet sind. Bei dieser Ausgestaltung haben die Druckbänder nicht nur die Aufgabe, den Faserverlauf in den Teilbereichen zu ändern, sondern auch das Dämmstoffelement zu komprimieren, bevor dieses insbesondere in komprimierter Stellung dem Härteofen zugeführt wird.

Die Druckelemente sind vorzugsweise als Druckleisten ausgebildet, die in Radialrichtung der Druckwalzen und in Richtung der Flächennormalen der Druckbänder ausgerichtet sind, so daß die Druckleisten rechtwinklig zu den großen Oberflächen des Dämmstoffelementes eingreifen und die Mineralfasem entsprechend ablängen. Die Druckelemente können in Halterungen lösbar befestigt sein, so daß in Abhängigkeit des herzustellenden Dämmstoffelementes die Anordnung der Druckelemente, insbesondere der Druckleisten, variiert werden kann. Hierdurch wird der Abstand benachbarter Teilbereiche mit umgelenkten Mineralfasem beeinflußt.

Erfindungsgemäß sind die Druckelemente zumindest entgegen der Bewegungsrichtung der Druckbänder bzw. Druckwalzen schwenkbeweglich gehaltert. Hierdurch wird der Vorteil erzielt, daß beim Herausziehen der Druckelemente aus der Fasermasse das Aufweiten des Dämmstoffelementes und damit der Grad der erforderlichen horizontalen Kompression zum Schließen einer hierdurch gebildeten Auskerbung klein gehalten wird.

Alternativ kann vorgesehen sein, daß die Druckelemente an einem Druckband angeordnet sind, welches mit einem an Ketten angehängten Rollenband kombiniert ist. Die Druckelemente greifen zwischen den einzelnen Rollen des Rollenbandes in das Dämmstoffelement ein. Voraussetzung hierzu ist, daß das Rollenband synchron mit dem Band umläuft, an dem die Druckleisten angeordnet sind. Diese Ausgestaltung hat den Vorteil, daß die synchron umlaufenden Bänder voneinander trennbar sind, so daß beispielsweise die beiden Bänder in Förderrichtung auseinanderlaufen. Hierdurch werden die Druckelemente durch den unterschiedlichen Bewegungsweg der beiden Bänder in Förderrichtung aus dem Dämmstoffelement herausgezogen.

Eine weitere Alternative, die insbesondere bei langsam laufenden Anlagen und zum Prägen von Dämmstoffelementen mit relativ hoher Rohdichte und damit größeren Widerständen gegen unbeabsichtigte Überverdichtungen eingesetzt werden, besteht darin, daß die Teilbereiche mit Hilfe einer oder mehrerer Druckleisten ausgebildet werden, die an einem oder mehreren Schlagbalken befestigt sind. Hierbei besteht auch die Möglichkeit, die Druckleisten an Druckstempeln anzuordnen, die regelmäßig auf- und niedergefahren werden, wobei die Druckstempel gegebenenfalls über einen bestimmten Weg mit dem geförderten Dämmstoffelement mitlaufen.

Schließlich ist vorgesehen, daß den Druckelementen eine parallel zu den großen Oberflächen komprimierend wirkende Kompressionseinrichtung nachgeschaltet ist. Während der lokalen Umlagerung der Mineralfasern in den Teilbereichen wird das Dämmstoffelement nahezu auf die gewünschte Materialstärke rechtwinklig zu den großen Oberflächen komprimiert. Üblicherweise ist aber auch noch eine Kompression parallel zu den großen Oberflächen notwendig, die teilweise bereits während der zuerst genannten Kompression durch die Druckelemente erfolgt. Das Umlagern der Mineralfasern in den Teilbereichen führt in der Regel aber zu schlitzförmigen Öffnungen in den großen Oberflächen, die durch eine abschließende Kompression parallel zu den großen Oberflächen geschlossen werden können. Ein derart vorbereitetes Dämmstoffelement wird nachfolgend einem Heißluftofen zugeführt, in dem das Bindemittel ausgehärtet und die Dimensionen des Dämmstoffelementes fixiert werden.

Weitere Merkmale und Vorteile der Erfindung ergeben sich aus der nachfolgenden Beschreibung der zugehörigen Zeichnung. In der Zeichnung zeigen:
- Figur 1: eine erste Ausführungsform eines Dämmstoffelementes in geschnitten dargestellter Seitenansicht;
- Figur 2: eine zweite Ausführungsform eines Dämmstoffelementes in geschnitten dargestellter Seitenansicht;
- Figur 3: eine dritte Ausführungsform eines Dämmstoffelementes in geschnitten dargestellter Seitenansicht und
- Figur 4: einen Abschnitt einer Vorrichtung zur Herstellung eines Dämmstoffelementes gemäß den Figuren 1 bis 3 in Seitenansicht.

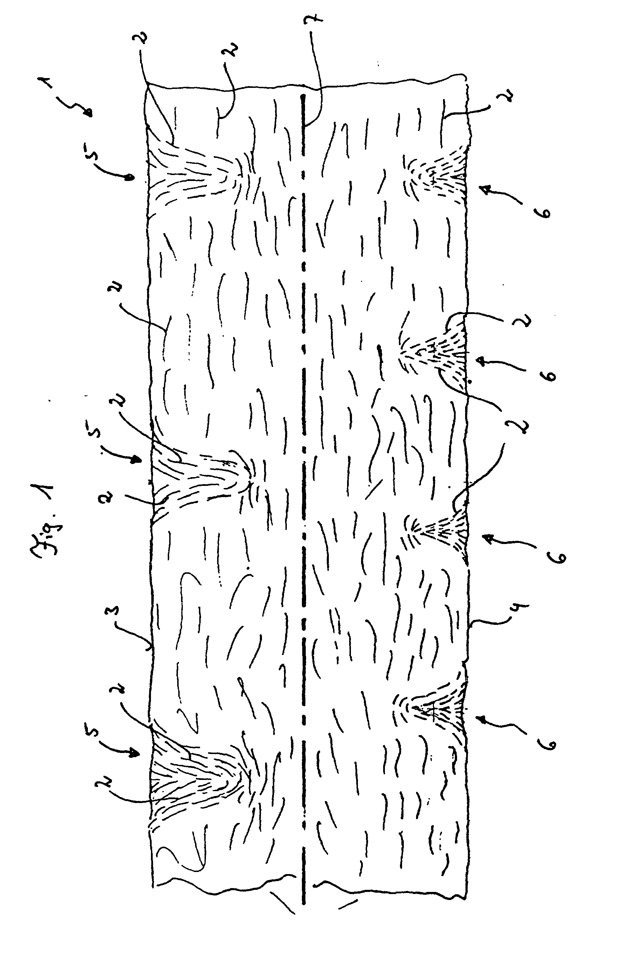

In Figur 1 ist eine erste Ausführungsform eines Dämmstoffelementes 1 bestehend aus Mineralfasern 2 dargestellt. Die Mineralfasern 2 sind mit ihrer Hauptfaserrichtung parallel zu zwei großen Oberflächen 3 und 4 angeordnet, wobei die beiden Oberflächen 3, 4 parallel zueinander verlaufen. Die Mineralfasem 2 bestehen aus aufgeschmolzenem und zerfaserten Kunststein und sind mit einem ausgehärteten Bindemittel zu einem Faserverband verbunden. Das Bindemittel ist diesbezüglich an den Kreuzungs- und Berührungsstellen der Mineralfasern 2 vorgesehen.

Das Dämmstoffelement 1 ist ein Abschnitt eines Mineralfaserfilzes und weist eine Rohdichte von 45 kg/m³ auf. Dieser Mineralfaserfilz ist in einer Wickelvorrichtung, die nicht näher dargestellt ist, aufwickelbar, wobei der Mineralfaserfilz in der Wickelvorrichtung einer Kompression rechtwinklig zu den großen Oberflächen 3, 4 unterzogen wird.

Das Dämmstoffelement 1 weist Teilbereiche 5 im Bereich der Oberfläche 3 und Teilbereiche 6 im Bereich der Oberfläche 4 auf. In diesen Teilbereichen 5, 6 sind die Mineralfasern 2 aus ihrer grundsätzlichen Faserorientierung parallel zu den großen Oberflächen 3, 4 in eine Richtung abgelenkt, die im wesentlichen rechtwinklig zu den großen Oberflächen 3, 4 verläuft. Durch diese Ausgestaltung werden Teilbereiche 5, 6 des Dämmstoffelementes 1 geschaffen, die eine verringerte Zugfestigkeit aufweisen bzw. eine Kompressionszone bilden. Hierbei liegen die Teilbereiche 5 im Bereich der Oberfläche 3, die im Mineralfaserfilzwickel außen liegt, wohingegen die große Oberfläche 4 mit den Kompressionszonen in Detailbereichen 6 im Mineralfaserfilzwickel innen liegt.

Die Teilbereiche 5, 6 sind zueinander in gleichen Abständen angeordnet, wobei in Figur 1 zu erkennen ist, daß die Abstände zwischen den Teilbereichen 5 größer sind als die Abstände zwischen den Teilbereichen 6.

Im wesentlichen weisen die Teilbereiche 5, 6 eine Rohdichte auf, die mit der Rohdichte im Bereich außerhalb der Teilbereiche 5, 6 des Dämmstoffelementes 1 übereinstimmt.

Die Teilbereiche 5, 6 sind in beiden großen Oberflächen 3, 4 beidseits einer Mittelebene 7 angeordnet, die im Mineralfaserfilzwickel die neutrale Phase bildet. Es ist zu erkennen, daß die Teilbereiche 5 eine größere Tiefe aufweisen, als die Teilbereiche 6, so daß die Teilbereiche 5 näher an die Mittelebene 7 heranreichen.

Obwohl die Rohdichte der Teilbereiche 5, 6 im wesentlichen mit der Rohdichte des Dämmstoffelementes 1 außerhalb der Teilbereiche 5, 6 übereinstimmt, ist vorgesehen, daß die Teilbereiche 5, 6 im Bereich der großen Oberflächen 3, 4 eine geringe Verdichtung der Mineralfasern 2 aufweisen. Zumindest in diesen Bereichen ist eine höhere Bindemittelkonzentration vorgesehen, so daß der Zusammenhalt der Mineralfasern 2 im Bereich der Teilbereiche 5, 6 erhöht ist, ohne daß hierdurch die Eigenschaften der aufgelösten Teilbereiche 5, 6 hinsichtlich ihrer Zugfestigkeit bzw. Kompressibilität auf den Ausgangswert eines Dämmstoffelementes 1 ohne Teilbereiche 5, 6 reduziert wird.

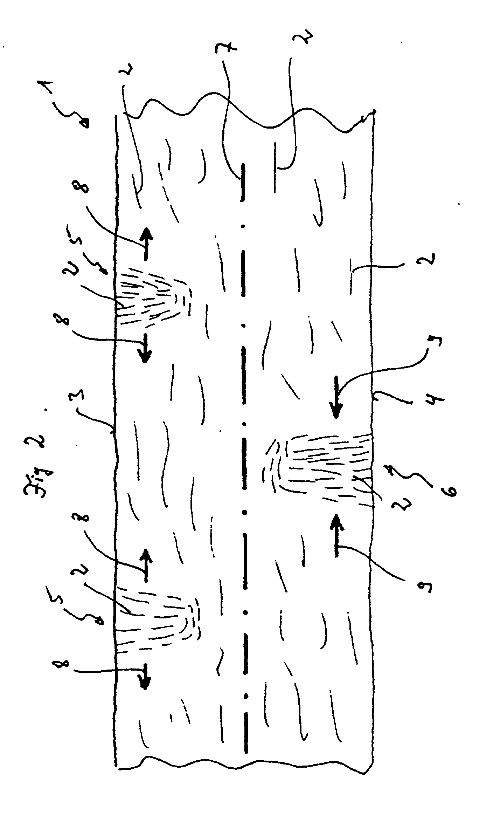

Figur 2 zeigt eine zweite Ausführungsform des Dämmstoffelementes 1, die sich dadurch von der ersten Ausführungsform des Dämmstoffelementes 1 gemäß Figur 1 unterscheidet, daß die Teilbereiche 5, 6 in den beiden gegenüberliegend angeordneten Oberflächen 3, 4 im wesentlichen identisch ausgebildet sind, die Teilbereiche 6 in der Oberfläche 4 aber mittig zwischen zwei Teilbereichen 5 in der Oberfläche 3 angeordnet sind.

In der Figur 2 sind ergänzend die Spannungsrichtungen im Bereich der Teilbereiche 5 und 6 in einem Mineralfaserfilzwickel durch Pfeile 8, 9 angedeutet. Die Pfeile 8, 9 zeigen die mögliche Flexibilität des Dämmstoffelementes 1 im Bereich der Teilbereiche 5, 6, wobei die Pfeile 8 die verringerte Zugfestigkeit in den Teilbereichen 5 und die Pfeile 9 die höhere Kompressibilität in den Teilbereichen 6 darstellen.

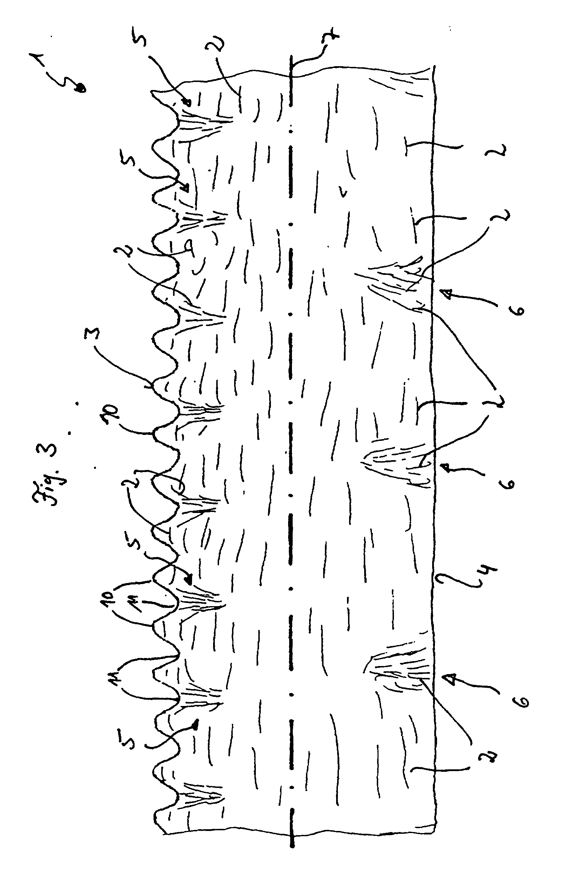

Eine weitere Ausführungsform eines Dämmstoffelementes 1 ist in Figur 3 dargestellt. Dieses Dämmstoffelement 1 stimmt im wesentlichen mit dem Dämmstoffelement 1 gemäß Figur 1 überein, weist aber im Bereich seiner großen Oberfläche 3 eine wellenförmige Strukturierung, bestehend aus Wellenbergen 10 und Wellentälern 11 auf. Im Bereich der Oberfläche 3 sind die Teilbereiche 5 mit den abgelenkten Mineralfasern 2 grundsätzlich in einem Wellental 11 angeordnet, wobei jedes zweite Wellental 11 einen Teilbereich 5 aufweist.

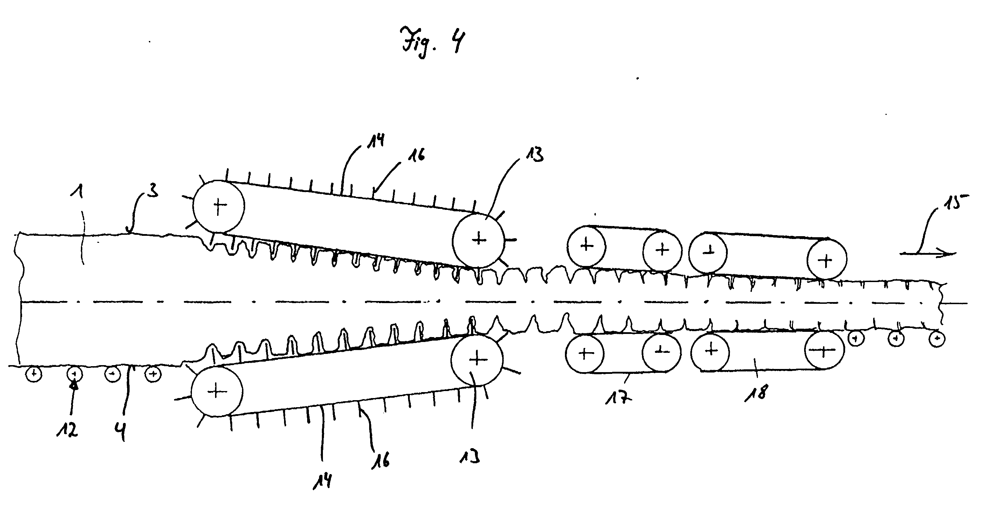

Eine Vorrichtung zur Herstellung eines Dämmstoffelementes 1 gemäß den Figuren 1 bis 3 ist in Figur 4 dargestellt, wobei die Figur 4 lediglich einen Abschnitt einer ansonsten üblichen Vorrichtung zur Herstellung von Dämmstoffelementen 1 zeigt. Nicht näher dargestellt sind die Aggregate zum Aufschmelzen und Zerfasern der Mineralfasern 2, ein nachgeschalteter Härteofen und die Aggregate zum Sammeln der zerfaserten Mineralfasern 2 zu einem Faservlies.

Das Dämmstoffelement 1 wird über eine Fördereinrichtung 12, hier bestehend aus einer Rollenbahn, zwei gegenüberliegend angeordneten Druckbändem 13 zugeführt. Die Druckbänder 13 bestehen in üblicher Weise aus einem Förderband 14, welches derart umläuft, daß der Untertrum des oberen Förderbandes 14 und der Obertrum des unteren Förderbandes 14 in Förderrichtung des Dämmstoffelementes 1 laufen. Die Förderrichtung ist durch einen Pfeil 15 dargestellt.

Jedes Druckband 13 weist an seinem Förderband 14 rechtwinklig zum Förderband 14 ausgerichtete Druckelemente 16 in Form von Druckleisten auf. Die Druckelemente 16 greifen in das Dämmstoffelement 1 zur Ausbildung der Teilbereiche 5 und 6 ein. Hierbei stimmt die Fördergeschwindigkeit des Dämmstoffelementes 1 im wesentlichen mit der Bandgeschwindigkeit der Förderbänder 14 überein, so daß eine Aufweitung der Teilbereiche 5, 6 durch die Druckelemente 16 möglichst gering gehalten wird.

Die Druckbänder 13 sind in Förderrichtung gemäß Pfeil 15 aufeinander zu ausgerichtet, so daß das Dämmstoffelement 1 zwischen den Druckbändem 13 nicht nur mit Teilbereichen 5, 6 versehen, sondern gleichzeitig rechtwinklig zu den großen Oberflächen 3, 4 komprimiert wird.

Hinter den Druckbändem 13 sind weitere Druckbänder 17, 18 paarweise ausgerichtet. Die Druckbänder 17 und 18 haben ebenfalls die Aufgabe, das Dämmstoffelement 1 rechtwinklig zu seinen großen Oberflächen 3, 4 zu komprimieren. Gleichzeitig erfolgt aber durch die Druckbänder 17, 18 auch eine Kompression des Dämmstoffelementes 1 parallel zu den großen Oberflächen 3, 4, so daß die von den Druckelementen 16 geöffneten Teilbereiche 5, 6 zwischen den Druckbändem 17, 18 geschlossen werden. Hierzu ist vorgesehen, daß die Druckbänder 17, 18 mit einer gegenüber der Fördergeschwindigkeit des Dämmstoffelementes 1 verrringerten Geschwindigkeit umlaufen, so daß die reibschlüssige Anlage der Druckbänder 17, 18 an den Oberflächen 3, 4 des Dämmstoffelementes 1 zu einer Stauchung des Dämmstoffelementes 1 zwischen den Druckbändern 17, 18 führt.

Demzufolge hat die dargestellte Vorrichtung zwei Kompressionsstufen, wobei in der ersten Kompressionsstufe zwischen den Druckbändern 13 die Teilbereiche 5, 6 mit den umgelenkten Mineralfasem 2 in das Dämmstoffelement 1 eingearbeitet werden, wohingegen in der zweiten Kompressionsstufe eine Kompression sowohl rechtwinklig als auch parallel zu den großen Oberflächen 3, 4 des Dämmstoffelementes 1 zwischen den Druckbändem 17, 18 erfolgt. Unmittelbar nach Verlassen der Druckbänder 17, 18 erreicht das Dämmstoffelement 1 den nicht näher dargestellten Härteofen, in dem das Bindemittel ausgehärtet und die Dimension des Dämmstoffelementes 1 festgelegt wird. An den Härteofen schließt sich dann eine ebenfalls nicht näher dargestellte Wickelvorrichtung an, in der das Dämmstoffelement 1 als Mineralfaservlies aufgewickelt und verpackt wird, bevor das Dämmstoffelement 1 versandfertig ist.

## Patentansprüche

1. Dämmstoffelement, bestehend aus Mineralfasern, insbesondere Steinwolle, welche an den Kreuzungs- und Berührungsstellen mittels eines ausgehärteten Bindemittels zu einem Faserverband verbunden und im wesentlichen parallel zu großen Oberflächen ausgerichtet sind, wobei der Faserverband in Teilbereichen zumindest teilweise aufgelöst ist,
**dadurch gekennzeichnet,**
**dass** die Mineralfasern (2) in den aufgelösten Teilbereichen (5, 6) aus ihrer ursprünglich parallel zu den großen Oberflächen (3, 4) verlaufenden Ausrichtung in eine nahezu rechtwinklig zu den großen Oberflächen (3, 4) verlaufenden Ausrichtung abgelenkt sind, wobei die Rohdichte der Teilbereiche (5, 6) im wesentlichen mit der Rohdichte des Dämmstoffelementes (1) außerhalb der Teilbereiche (5, 6) übereinstimmt, und
**dass** die Teilbereiche (5, 6) in beiden großen Oberflächen (3, 4) ausgebildet sind.

2. Dämmstoffelement nach Anspruch 1,
**dadurch gekennzeichnet,**
**dass** die Teilbereiche (5, 6) zueinander in gleichen Abständen angeordnet sind.

3. Dämmstoffelement nach Anspruch 1,
**dadurch gekennzeichnet,**
**dass** die Teilbereiche (5, 6) in den gegenüberliegend angeordneten großen Oberflächen (3, 4) versetzt zueinander angeordnet sind.

4. Dämmstoffelement nach Anspruch 1,
**dadurch gekennzeichnet,**
**dass** die Teilbereiche (5, 6) in Abhängigkeit der Rohdichte, des Kompressionsgrades und / oder der Ausgangsmaterialstärke bis maximal in die durch eine Ebene (7) bestimmte Mitte zwischen den und parallel zu den großen Oberflächen (3, 4) reichen.

5. Dämmstoffelement nach Anspruch 1,
**dadurch gekennzeichnet,**
**dass** die Teilbereiche (5, 6) eine erhöhte Bindemittelkonzentration aufweisen.

6. Dämmstoffelement nach Anspruch 1,
**dadurch gekennzeichnet,**
**dass** die Teilbereiche (5, 6) im Bereich der großen Oberflächen (3, 4) eine geringe Verdichtung der Mineralfasern (2) aufweisen.

7. Dämmstoffelement nach Anspruch 1,
**gekennzeichnet durch**
die Ausbildung als Mineralfaserfilz.

8. Dämmstoffelement nach Anspruch 1,
**gekennzeichnet durch**
eine Rohdichte zwischen 20 und 80 kg/m³, vorzugsweise zwischen 40 und 60 kg/m³..

9. Dämmstoffelement nach Anspruch 1,
**dadurch gekennzeichnet,**
**dass** zwischen benachbarten Teilbereichen (5, 6) Abstände zwischen 10 und 200 mm, insbesondere zwischen 50 und 125 mm vorgesehen sind.

10. Dämmstoffelement nach Anspruch 1,
**dadurch gekennzeichnet,**
**dass** die Teilbereiche (5, 6) in der ersten und / oder der zweiten großen Oberfläche (3, 4) in unterschiedlichen, insbesondere variablen Abständen angeordnet sind.

11. Dämmstoffelement nach Anspruch 1,
**dadurch gekennzeichnet,**
**dass** die Teilbereiche (5, 6) als Einschnitte ausgebildet sind.

12. Dämmstoffelement nach Anspruch 1,
**dadurch gekennzeichnet,**
**dass** zumindest eine der großen Oberflächen (3, 4) eine wellenförmige Strukturierung aufweist.

13. Dämmstoffelement nach Anspruch 12,
**dadurch gekennzeichnet,**
**dass** die Teilbereiche (5, 6) im Bereich von Wellentälern (11) der Strukturierung angeordnet sind.

14. Vorrichtung zur Herstellung eines Dämmstoffelementes (1) aus Mineralfasern (2), insbesondere eines Mineralfaserfilzes aus Steinwolle, mit einer Fördereinrichtung (12), auf der die aus einem Schmelz- und Zerfaserungsaggregat abgezogenen Mineralfasem (2) anznorderen sind und mit einem Härteofen, in dem ein Bindemittel zwischen den Mineralfasern (2) ausgehärtet wird, wobei
dem Härteofen zwei gegenüberliegend angeordnete Druckbänder (13) und / oder Druckwalzen vorgeschaltet sind, die Druckelemente (16) aufweisen, welche in Teilbereiche (5, 6) der großen Oberflächen (3, 4) des Dämmstoffelementes (1) eindringen, **dadurch gekennzeichnet, dass** die Druckelemente (1b) so eindringen, dass die im wesentlichen parallel zu den großen Oberflächen (3, 4) verlaufenden Mineralfasem (2) in den Teilbereichen (5, 6) in im wesentlichen rechtwinklige Ausrichtung zu den großen Oberflächen (3, 4) abgelenkt werden.

15. Vorrichtung nach Anspruch 14,
**dadurch gekennzeichnet,**
**dass** die Druckbänder (13) in Förderrichtung aufeinander zulaufend angeordnet sind.

16. Vorrichtung nach Anspruch 14,
**dadurch gekennzeichnet,**
**dass** die Druckelemente (16) als Druckleisten ausgebildet sind, die in Radialrichtung der Druckwalzen und in Richtung der Flächennormalen der Druckbänder (13) ausgerichtet sind.

17. Vorrichtung nach Anspruch 14,
**dadurch gekennzeichnet,**
**dass** die Druckelemente (16) zumindest entgegen der Bewegungsrichtung der Druckwalzen und / oder Druckbänder (13) schwenkbeweglich sind.

18. Vorrichtung nach Anspruch 14,
**dadurch gekennzeichnet,**
**dass** die Druckelemente (16) an einem Schlagelement befestigt sind.

19. Vorrichtung nach Anspruch 14,
**dadurch gekennzeichnet,**
**dass** die Druckbänder (13) stempelförmig ausgebildet sind und vorzugsweise mit dem Dämmstoffelement (1) über einen Abschnitt des Förderweges bewegbar sind.

20. Vorrichtung nach Anspruch 14,
**dadurch gekennzeichnet,**
**dass** den Druckelementen (16) eine parallel zu den großen Oberflächen (3, 4) komprimierend wirkende Kompressionseinrichtung (17, 18) nachgeschaltet ist.

## Claims

1. Insulating element consisting of mineral fibres, particularly of rock wool, which fibres are connected at the crossing and contacting points thereof by means of a cured binder to form a fibre composite and are oriented substantial parallel with large surfaces, said fibre composite being at least partly dissolved in partial areas,
**characterized in**
**that** said mineral fibres (2) within said dissolved partial areas (5, 6) are deflected from their originally parallel orientation with respect to the large surfaces (3, 4) to an orientation almost at right angles to said large surfaces (3, 4), with the bulk density of said partial areas (5, 6) substantially corresponding to the bulk density of the insulating element (1) outside of said partial areas (5, 6), and
**that** said partial areas (5, 6) are formed in both said large surfaces (3, 4).

2. Insulating element according to claim 1,
**characterized in**
**that** said partial areas (5, 6) are arranged at equal distances one to another.

3. Insulating element according to claim 1,
**characterized in**
**that** said partial areas (5, 6) are arranged in a mutually offset fashion in said oppositely arranged large surfaces (3, 4).

4. Insulating element according to claim 1,
**characterized in**
**that** said partial areas (5, 6) at maximum reach until the centre between and parallel with said large surfaces (3, 4) determined by a plane (7), in dependence of the bulk density, the degree of compression and/or the starting material thickness.

5. Insulating element according to claim 1,
**characterized in**
**that** said partial areas (5, 6) have an increased binder concentration.

6. Insulating element according to claim 1,
**characterized in**
**that** said partial areas (5, 6) include a low compression of the mineral fibres (2) within the region of the large surfaces (3, 4).

7. Insulating element according to claim 1,
**characterized by**
being formed as a mineral fibre felt.

8. Insulating element according to claim 1,
**characterized by**
a bulk density of between 20 and 80 kg/m³, preferably of between 40 and 60 kg/m³.

9. Insulating element according to claim 1,
**characterized in**
**that** between adjacent partial areas (5, 6) distances are provided of between 10 and 200 mm, particularly of between 50 and 125 mm.

10. Insulating element according to claim 1,
**characterized in**
**that** said partial areas (5, 6) are arranged in the first and/or second large surfaces (3, 4) at different and particularly variable distances.

11. Insulating element according to claim 1,
**characterized in**
**that** said partial areas (5, 6) are formed as incisions.

12. Insulating element according to claim 1,
**characterized in**
**that** at least one of said large surfaces (3, 4) includes a wave-shaped texture.

13. Insulating element according to claim 12,
**characterized in**
**that** said partial areas (5, 6) are arranged within the region of wave troughs (11) of said texture.

14. Device for manufacturing an insulating element (1) from mineral fibres, particularly from a mineral fibre felt made of rock wool, said device comprising a conveying installation (12) where the mineral fibres drawn off a melting and disaggregating unit have to be arranged on, and a hardening furnace in which a binder between said mineral fibres (2) is cured, wherein said hardening furnace has two oppositely arranged upstream pressure belts (13) and/or pressure rollers including pressure elements (16) that penetrate in partial areas (5, 6) of the large surfaces (3, 4) of the insulating element (1),
**characterized in**
**that** said pressure elements (16) penetrate in a manner such that the mineral fibres (2) running substantially parallel with said large surfaces (3, 4) are deflected in said partial areas (5, 6) so that they have an orientation substantially at right angles to said large surfaces (3, 4).

15. Device according to claim 14,
**characterized in**
**that** said pressure belts (13) are arranged to run towards each other in the conveying direction.

16. Device according to claim 14,
**characterized in**
**that** said pressure elements (16) are formed as pressure strips which are aligned in the radial direction of the pressure rollers and in the direction of the surface normal of the pressure belts (13).

17. Device according to claim 14,
**characterized in**
**that** said pressure elements (16) are pivotally movable at least oppositely to the direction of movement of said pressure rollers and/or pressure belts (13).

18. Device according to claim 14,
**characterized in**
**that** said pressure elements (16) are fixed to a beater element.

19. Device according to claim 14,
**characterized in**
**that** said pressure belts (13) are in a plunger form and are preferably movable over a part of the conveying distance together with the insulating element (1).

20. Device according to claim 14,
**characterized in**
**that** said pressure elements (16) include a downstream compression installation (17, 18) with compressive action parallel with the large surfaces (3, 4).

## Revendications

1. Elément en matériau isolant constitué par des fibres minérales, en particulier en laine minérale, qui sont reliées en un assemblage de fibres au moyen d'un liant durci aux points de croisement et de contact et qui sont orientées substantiellement parallèlement aux grandes surfaces, l'assemblage de fibres étant au moins partiellement désagrégé dans des zones partielles,
**caractérisé en ce**
**que** les fibres minérales (2) sont déviées dans les zones partielles désagrégées (5, 6) à partir de leur orientation à l'origine parallèlement aux grandes surfaces (3, 4) dans une orientation presqu'à angle droit par rapport aux grandes surfaces (3, 4), la masse volumique apparente des zones partielles (5, 6) coïncidant substantiellement avec la masse volumique de l'élément en matériau isolant (1) à l'extérieur des zones partielles (5, 6) et
**que** les zones partielles (5, 6) sont configurées dans les deux grandes surfaces (3, 4).

2. Elément en matériau isolant selon la revendication 1,
**caractérisé en ce**
**que** les zones partielles (5, 6) sont placées aux mêmes distances l'une par rapport à l'autre.

3. Elément en matériau isolant selon la revendication 1,
**caractérisé en ce**
**que** les zones partielles (5, 6) sont placées décalées l'une par rapport à l'autre dans les grandes surfaces (3, 4) placées opposées.

4. Elément en matériau isolant selon la revendication 1,
**caractérisé en ce**
**que** les zones partielles (5, 6) vont, en fonction de la masse volumique apparente, du degré de compression et/ou de l'épaisseur du matériau de départ, au maximum jusqu'au milieu déterminé par un plan (7) entre les et parallèlement aux grandes surfaces (3, 4).

5. Elément en matériau isolant selon la revendication 1,
**caractérisé en ce**
**que** les zones partielles (5, 6) ont une concentration élevée de liant.

6. Elément en matériau isolant selon la revendication 1,
**caractérisé en ce**
**que** les zones partielles (5, 6) on un faible compactage des fibres minérales (2) dans la zone des grandes surfaces (3, 4).

7. Elément en matériau isolant selon la revendication 1,
**caractérisé par**
la configuration comme feutre en fibres minérales.

8. Elément en matériau isolant selon la revendication 1,
**caractérisé par**
une masse volumique entre 20 et 80 kg/m³, de préférence entre 40 et 60 kg/m³.

9. Elément en matériau isolant selon la revendication 1,
**caractérisé en ce**
**que** des écarts entre 10 et 200 mm, en particulier entre 50 et 125 mm, sont prévus entre des zones partielles voisines (5, 6).

10. Elément en matériau isolant selon la revendication 1,
**caractérisé en ce**
**que** les zones partielles (5, 6) sont placées dans la première et/ou la seconde grande surface (3, 4) à différents écarts, en particulier à des écarts variables.

11. Elément en matériau isolant selon la revendication 1,
**caractérisé en ce**
**que** les zones partielles (5, 6) sont configurées comme des incisions.

12. Elément en matériau isolant selon la revendication 1,
**caractérisé en ce**
**qu'**au moins l'une des grandes surfaces (3, 4) présente une structuration ondulée.

13. Elément en matériau isolant selon la revendication 12,
**caractérisé en ce**
**que** les zones partielles (5, 6) sont placées dans la zone des creux des ondes (11 ) de la structuration.

14. Dispositif pour la fabrication d'un élément en matériau isolant (1) en fibres minérales (2), en particulier d'un feutre en fibres minérales en laine minérale, avec un dispositif de transport (12) sur lequel les fibres minérales (2) retirées d'un agrégat de fusion et de défibrage doivent être placées et avec un four de trempe dans lequel un liant est durci entre les fibres minérales (2), deux bandes de pression (13) placées en face l'une de l'autre et/ou rouleaux de pression étant placées en amont du four de trempe, bandes de pression qui présentent des éléments de pression (16) qui pénètrent dans des zones partielles (5, 6) des grandes surfaces (3, 4) de l'élément en matériau isolant (1 ), **caractérisé en ce**
**que** les éléments de pression (16) pénètrent de telle manière que les fibres minérales (2) qui sont substantiellement parallèlement aux grandes surfaces (3, 4) sont déviées dans les zones partielles (5, 6) dans une orientation substantiellement à angle droit par rapport aux grandes surfaces (3, 4).

15. Dispositif selon la revendication 14,
**caractérisé en ce**
**que** les bandes de pression (13) sont placées en allant l'une sur l'autre dans le sens du transport.

16. Dispositif selon la revendication 14,
**caractérisé en ce**
**que** les éléments de pression (16) sont configurés comme des baguettes de pression qui sont orientées dans le sens radial des rouleaux de pression et en direction de la verticale de la surface des bandes de pression (13).

17. Dispositif selon la revendication 14,
**caractérisé en ce**
**que** les éléments de pression (16) sont mobiles en pivotement au moins à l'encontre du sens de déplacement des rouleaux de pression et/ou des bandes de pression (13).

18. Dispositif selon la revendication 14,
**caractérisé en ce**
**que** les éléments de pression (16) sont fixés à un élément percuteur.

19. Dispositif selon la revendication 14,
**caractérisé en ce**
**que** les bandes de pression (13) sont configurées en forme de poinçon et sont de préférence mobiles avec l'élément en matériau isolant (1) sur une section du parcours de transport.

20. Dispositif selon la revendication 14,
**caractérisé en ce**
**qu'**un dispositif de compression (17, 18), qui agit en comprimant parallèlement aux grandes surfaces (3, 4), est placé en aval des éléments de pression (16).
